(19) Europäisches Patentamt
European Patent Office
Office européen des brevets

(11) Publication number: **0 288 308 B1**

(12) # EUROPEAN PATENT SPECIFICATION

(45) Date of publication of patent specification: **29.03.95**

(51) Int. Cl.6: **C08G 75/02**, B29C 51/14

(21) Application number: **88303659.2**

(22) Date of filing: **22.04.88**

(54) **Preparation of a thermoformed polyarylene sulfide container.**

(30) Priority: **24.04.87 JP 101589/87**

(43) Date of publication of application:
**26.10.88 Bulletin 88/43**

(45) Publication of the grant of the patent:
**29.03.95 Bulletin 95/13**

(84) Designated Contracting States:
**AT BE CH DE ES FR GB GR IT LI LU NL SE**

(56) References cited:
**EP-A- 0 166 368** **EP-A- 0 166 451**
**EP-A- 0 201 851** **EP-A- 0 216 116**
**EP-A- 0 233 494** **EP-A- 0 260 871**
**US-A- 3 960 807**

(73) Proprietor: **KUREHA KAGAKU KOGYO KABUSHIKI KAISHA**
**1-9-11, Nihonbashi, Horidome-cho**
**Chuo-ku**
**Tokyo 103 (JP)**

(72) Inventor: **Katto, Takayuki**
**1-1-5 Nakaoka-machi**
**Iwaki-shi**
**Fukushima-ken (JP)**
Inventor: **Ichikawa, Yukio**
**1-2 Ochiai**
**Nishiki-machi**
**Iwaki-shi**
**Fukushima-ken (JP)**
Inventor: **Enoki, Toshio**
**30-3 Kubota-Gozenzaki**
**Nakoso-machi**
**Iwaki-shi**
**Fukushima-ken (JP)**
Inventor: **Katase, Kenichi**
**1397-35 Ushiku-cho**
**Ushiku-shi**
**Ibaraki-ken (JP)**

(74) Representative: **Woods, Geoffrey Corlett et al**
**J.A. KEMP & CO.**
**14 South Square**
**Gray's Inn**
**London WC1R 5LX (GB)**

EP 0 288 308 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the production of a thermoformed container.

Poly (arylene sulfide), hereinafter referred to as "PAS", is known as an excellent engineering plastic having thermal resistance, chemical resistance (acid-resistance, alkali-resistance and solvent-resistance), oil-resistance, hot water-resistance, processability and mechanical properties and is used in various fields. Further, taking advantage of these excellent properties, its use is being extended to the fields of fibers and films.

On the other hand, in recent years, as a heat-resistant plastic container, for instance a thermoformed container for foodstuffs which can be used in an electronic oven for domestic use and is resistant to oven temperatures of almost 200 °C, an easily crystallizable polyethylene terephthalate (hereinafter referred to as "PET") has attracted public attention.

However, a PET container has a defect. It is not resistant to temperatures of higher than 200 °C, particularly higher than 220 °C, in an electric oven. As is well known, PAS has higher melting point than PET. From a viewpoint of heat-resistance, PAS has a better performance than PET. Further, PAS has better chemical stability under high temperature and high humidity and better solvent-resistance than PET.

These excellent properties of PAS are mainly due to the fact that PAS is crystallized.

The present invention relates to the preparation of a heat-resistant container by thermoforming a sheet of PAS which is substantially amorphous.

As a result of the present inventors' extensive studies to obtain a heat-resistant PAS container by thermoforming taking advantage of these characteristic points of PAS, the present inventors have attained the present invention.

The present invention seeks to provide a process for the preparation of thermoformed PAS container having excellent heat-resistance, oil-resistance, chemical stability under high temperature and high humidity and low gas permeability which is suitable for heating foodstuff packaged in the container in, for example, an electronic range or electric oven.

Accordingly, the present invention provides a process for the preparation of a crystallized, thin walled container, which process comprises:

(i) extrusion molding a poly(arylene sulfide) through a T-die and immediately rapidly cooling the resulting almost molten sheet on a cooling roll having a temperature of not higher than 110 °C, the poly(arylene sulfide) having a substantially linear structure, containing not less than 70 wt% of a repeating unit

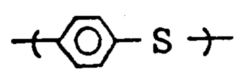

and having a logarithmic viscosity number of from 0.2 to 1.0 as measured in a solution of 1-chloronaphthalene at a concentration of 0.4g/dl and at a temperature of 208 °C, such as to produce a sheet having a thickness of from 0.05 mm to 1 mm, a crystallization index of lower than 15%, an elongation of not less than 100% at room temperature and a half-width of the peak on the crystallization curve, obtained on crystallization of the said sheet by heating, of not more than 15 °C; and

(ii) thermoforming the sheet by a shaping step and crystallization step such that the resulting container has a crystallization index of not less than 15% and a thickness of not less than 0.04 mm and less than 1 mm.

The crystallized, thin-wall container is obtained by thermoforming a sheet of an improved crystallization rate, having a crystallinity index of below 15% and an elongation, at room temperature, of not less than 100% and a half-width of the peak on a crystallization curve, obtained when a temperature is raised from its amorphous state, of not more than 15 °C. Further, the process for producing the container comprises thermoforming the sheet with at least a shaping step and a crystallization step.

The thermoformed PAS container is excellent in heat-resistance, mechanical properties, chemical resistance, chemical stability under high temperature and high humidity and oil-resistance and particularly has characteristic features of being reliable at high temperatures compared with a thermoformed PET container and of being improved in chemical stability under high temperature and high humidity.

The PAS for a thermoformed container is a polymer containing not less than 70 wt%, preferably not less than 80 wt% and more preferably not less than 90 wt% of p-phenylene sulfide unit,

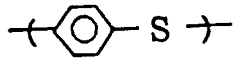 ,

as the main constituent. The fact that the content of p-phenylene sulfide unit is not less than 70 wt% means that the PAS may contain not more than 30 wt% of another copolymer constituent, for instance, a metaphenylene sulfide unit,

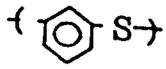 ,

a diphenylketone sulfide unit,

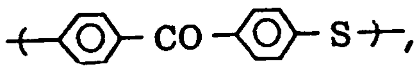 ,

a diphenylsulfone sulfide unit,

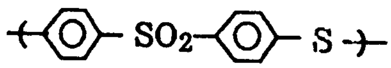 ,

a diphenylether sulfide unit,

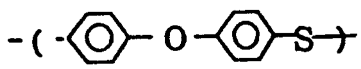 ,

a 2,6-naphthalene sulfide unit,

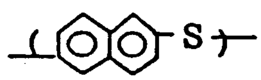 ,

or a trifunctional unit,

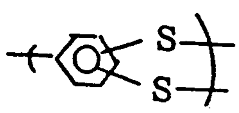 .

The content of a multifunctional unit not lower than trifunctional is preferably not more than 1 mol%.

The PAS polymer of high polymerization degree having a high solution viscosity can be produced, for instance, by the method described in US-A-4,645,826.

Further, a block copolymer having paraphenylene sulfide repeating unit,

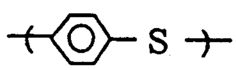 ,

as the main constituent, for instance, a block copolymer comprising from 70 to 95 mol% of a repeating unit of

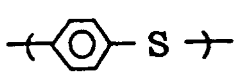

and from 5 to 30 mol% of a metaphenylene sulfide repeating unit of

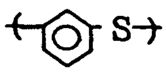

in the polymer chain can preferably be used.

Such block copolymer having a high melt viscosity can be manufactured by the process described in, for instance, JP-A-61-14,228(1986).

A material resin used for a thermoformed container of the present invention is PAS having the chemical structure described above and a solution viscosity as the logarithmic viscosity number, $\eta_{inh}$, of 0.2 to 1.0 (dl/g) preferably 0.25 to 0.9 (dl/g). A material resin having a low solution viscosity that is when a logarithmic viscosity number, $\eta_{inh}$, is below 0.2, is not suitable because it is difficult to melt mold to form a sheet or thermoform as a sheet. Even when thermoforming is possible, the product is weak in strength.

On the other hand, when the resin has an $\eta_{inh}$ of more than 1.0, melt molding to a uniform sheet or thermoforming as a sheet becomes difficult and accordingly, both resins are not suitable.

From the viewpoint of processability, a preferable PAS according to the present invention is one having substantially linear structure. However, the PAS obtained, for instance, by polymerizing monomers while using a small amount of a cross-linking agent (not more than 1.0 mol%) or by thermally treating a PAS in the presence of oxygen at high temperature to increase the melt viscosity, can be used.

Because it becomes difficult to melt mould the material resin to a sheet or to thermoform the sheet when the degree of cross-linking becomes too high, it is preferable to use not more than 1 mol% of cross-linking agent to the monomers. On the other hand, an increase of melt viscosity of not more than five times by curing PAS to the melt viscosity before curing, is preferable.

To thermoform a PAS which is substantially amorphous, a PAS sheet is preliminarily heated to the temperature sufficient to transform it, then the sheet is brought into close contact to the inner surface of a mold by a publicly known method of vacuum assist or compressed air assist and then the crystallization is promoted. However, from the viewpoint of shortening the molding cycle, the higher crystallization rate is more preferable.

To shorten the crystallization time, it is preferable that the crystallization rate of PAS is higher. Since the crystallization rate of PAS is inherently higher than that of PET, PAS can be used in thermal molding by itself. A PAS and a PAS composition of which the crystallization rate have been improved can preferably be used. As such PAS and PAS composition, the following substances can be exemplified:

(a) PAS as described in EP-A-216,116, treated with a solution, for example an aqueous solution of a salt of the strong acid-weak base type after polymerization, namely aqueous solution or a mixed solution of water (as the main component) and a water-soluble organic solvent, such as, for example alcohol or ketone of the salt, more concretely, an aqueous solution of ammonium chloride,

(b) PAS composition containing not more than 3% by weight of at least one inorganic material selected from kaoline, talc, mica, activated clay, zirconium oxide, diatomaceous earth and titanium oxide, as a nucleating agent, or

(c) PAS composition containing not more than 10% by weight of poly(biphenylene sulfide) (hereinafter reference to as "PBS") consisting mainly of a repeating unit of

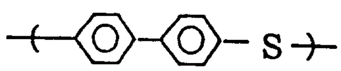

as a nucleating agent. The PBS herein mentioned is a polyarylene sulfide having a repeating unit of

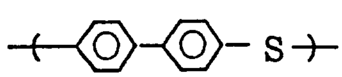

as the main constituent and a melting point (hereinafter referred to as "Tm") of not lower than 290 °C or a melt crystallization temperature (hereinafter referred to as "$Tc_2$") of not lower than 220 °C.

The words "having the repeating unit as the main constituent" mean that PBS contains not less than 50 wt%, preferably not less than 60 wt% of a repeating unit of

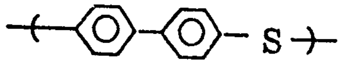.

When the content of the repeating unit is below 50 wt%, the effect as a nucleating agent, namely, the effects of improving the crystallization rate and micronizing the spherulite size, is lowered and accordingly, is not preferable.

As a repeating unit other than

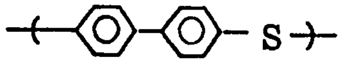,

for example

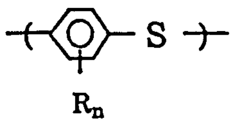, 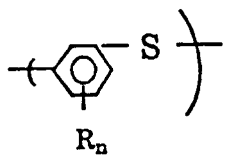, 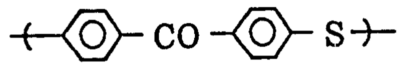,

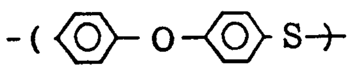, 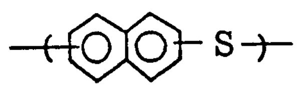, or

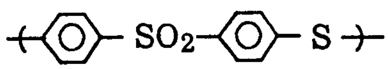

are preferable, (wherein R is a hydrogen atom or an alkyl group having not more than 5 carbon atoms and n is an integer of 1 to 4).

Among PBSs containing a repeating unit other than

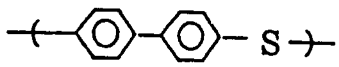,

namely a copolymer, one having a Tm of not lower than 290 °C or $Tc_2$ of not lower than 220 °C is preferred and one having a Tm of not lower than 330 °C or $Tc_2$ of not lower than 240 °C is more preferred.

When the Tm is below 290 °C and the $Tc_2$ is below 220 °C, the effect of the nucleating agent becomes insufficient and accordingly is not desirable.

Besides, copolymers of

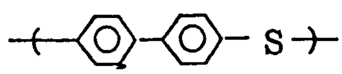

and

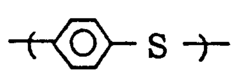

having a Tm of not lower than 290 °C or a $Tc_2$ of not lower than 220 °C are remarkably excellent as nucleating agents and are accordingly preferred.

Among homopolymers of

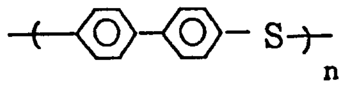

,

those having a Tm in the range of 400 to 450 °C or a $Tc_2$ in the range of 280 to 350 °C are remarkably excellent as nucleating agent and are accordingly preferred.

It is preferable that the amount of PBS added to PAS is not more than 10% by weight. When PBS is added in an amount of over 10% by weight, its nucleating effect does not increase in proportion to the amount added and that part over 10% works only as a filler.

Furthermore, it is desirable that the polymeric nucleating agent is dispersed well in PAS in order to exhibit its effect as the agent satisfactorily.

The addition of the polymeric nucleating agent can be performed by any method, for instance, a method of adding the agent to powdery PAS, a method of adding the agent to PAS at the time of molding and a method of adding the agent to a polymeric slurry of PAS after polymerization and dehydration and drying the mixture.

Although it is preferable that said PAS composition is used as it is, it is also possible to add, for example an inorganic filler, a coloring agent, a stabilizer or a releasing agent to the composition in the range such that no damage is caused to the molding of the composition into a sheet or to the thermoforming of the sheet.

Furthermore, a thermoplastic resin other than PAS can also be blended with PAS in the range such that no damage is caused to the molding of the composition to a sheet or to the thermoforming of the sheet. The inorganic filler may be, for example mica, talc, $TiO_2$, $SiO_2$, $Al_2O_3$, $CaCO_3$, kaoline, carbon black, activated clay, diatomaceous earth or zirconium oxide.

Among inorganic fillers, fillers such as kaoline, talc, mica, activated clay, zirconium oxide, diatomaceous earth and titanium oxide, used as a nucleating agent and a small amount of filler can be added according to necessity. Particularly, kaoline has a large effect as a nucleating agent and is preferably used.

When an inorganic material is used as the nucleating agent, an amount of not more than 3 wt% is preferable. When more than 3 wt% of inorganic material is added, the effect as a nucleating agent does not increase in proportion to the amount added.

The addition of inorganic material as nucleating agent can be performed by any method, for instance, a method of adding the material to powdery PAS, a method of adding the material to PAS at the time of molding a method of adding the material to a polymeric slurry of PAS after polymerization and dehydration and drying the mixture.

## PRODUCTION OF THERMOFORMED CONTAINER

### Outline:

The present invention relates to the production of a crystallized, thin-wall container from a PAS sheet being substantially amorphous by a conventional, thermoforming apparatus.

The process for producing the container comprises mainly the following steps:

(a) Extrusion molding step.

A sheet of substantially amorphous PAS is molded from a PAS composition by extrusion molding.

(b) Thermoforming step.

A container is formed from the sheet by thermoforming. The forming is performed through at least (1) a shaping step and (2) a crystallizing step.

### Extrusion molding step:

The production of a sheet or a film (hereinafter referred to as simply a "sheet") by extrusion molding is performed with a T-die. The thickness of the sheet is 0.05 to 1 mm and since it is necessary to cool the sheet rapidly to have it in an amorphous state, too thick a sheet is not preferable.

When the thickness of the sheet is more than 1 mm, its inner part is likely to crystallize even when the sheet is rapidly cooled.

On the other hand, when the thickness of the sheet is less than 0.05 mm, the container obtained by thermoforming of the sheet is poor in keeping its shape.

At the time of molding the composition to a sheet, it is necessary to rapidly cool the extruded sheet immediately after the extrusion to keep the crystallinity at the minimum and the temperature of casting rolls (cooling rolls) to cool the sheet rapidly, which is extruded through a T-die and almost in a molten state, is not higher than 110 °C, more preferably not higher than 100 °C and most preferably not higher than 90 °C.

The words "the substantially amorphous sheet" used in the present invention mean the sheet has a sufficiently low crystallinity to be thermoformed in the later step. Concretely, the sheet has a crystallinity index of below 15% and an elongation of not less than 100% at room temperature. The sheet having a crystallinity index of not less than 15% or an elongation of below 100% at room temperature, is difficult to thermoform and accordingly, is not suitable.

When a substantially amorphous sheet is thermoformed by a mold, it is usually necessary to heat the sheet preliminarily. In this case, it is necessary to heat the sheet to a temperature not lower than the glass transition temperature (hereinafter referred to as "Tg") of PAS. However, if the sheet is heated to too high a temperature crystallization is promoted too much which makes stretching in the later stage difficult and therefore it is preferable to keep the preliminary heating temperature in the range of higher than Tg and lower than $Tc_1$. The $Tc_1$ herein mentioned is the crystallization temperature of PAS when it is heated from a solid and amorphous state. Practically, it is preferable to have the preliminary heating temperature in the range of 80 to 130 °C.

Thermoforming step:

The thermoforming comprises (i) giving a negative or a positive pressure to the sheet under heating, (ii) keeping the sheet in close contact with the inner surface of a mold and (iii) obtaining a formed product of the same shape as the mold. Following this shaping step, the crystallization step is performed.

The thermoforming is a publicly known technique and a method of shaping, vacuum forming or air pressure forming which are publicly known, are for example used. As examples of the vacuum forming method, straight forming, drape forming, plug-assist forming or matched mold forming may be mentioned. On the other hand, as examples of the crystallization method, a method of further holding a shaped container in the mold which is heated to higher than its crystallization temperature for an appropriate period of time to have the shaped container crystallized, a method to promote crystallization of a shaped container by holding it in another mold, which is heated to the appropriate temperature for promoting crystallization of the container, after removing it from the original mold and a method to promote crystallization by having a shaped container in contact with an organic solvent or an organic gas as is described in EP-A-0,233,494 can be mentioned.

The crystallization temperature in the step of crystallization is principally between $Tc_1$ and Tm. However, when the crystallization is performed only by heating, the practical temperature is in the range of 130 to 250 °C. When the crystallization is performed by contacting a shaped container with an organic solvent or an organic gas, it is sufficiently promoted even at the temperature of not higher than the Tg of PAS and the crystallization is performed at a temperature in the range of room temperature to 200 °C.

Since the crystallinity index affects the physical properties of the final thermoformed container, particularly its heat-resistance, it is preferable that the crystallization is sufficiently promoted. From this viewpoint, the container produced by the process of the present invention has a crystallinity index of not lower than 15% in order to exhibit the characteristic features of PAS, for example the high melting point and the high heat-resistance.

Furthermore, from the viewpoint of shortening the forming cycle of the container, it is necessary to have a high crystallization rate and as an index of the rate, it is preferable that the peak of the crystallization curve, obtained on crystallization when the temperature is raised from the solid and amorphous state, has a sharpness of which the half-width is not larger than 15 °C.

The formed container is trimmed after the crystallization step and the scrap is pulverized and re-used in the step extruding the sheet.

The thickness of the container obtained, the product, is not less than 0.04 mm and less than 1 mm. When the thickness of the sheet before forming is too thick to give the wall-thickness of not less than 1 mm, it is difficult to obtain the sheet which is substantially and uniformly amorphous. On the other hand, when the thickness of the container is less than 0.04 mm, the shape keeping property of the container is poor.

The thermoformed container obtained according to the present invention can be utilized in various fields such as, for example industrial uses, foodstuff uses, medical uses, and grocery uses taking advantages of its characteristic points, such as excellent heat-resistance, chemical stability under high temperature and high humidity, chemical-resistance, oil-resistance, resistance to hot water and low gas permeability.

Accordingly, the process of the invention may further comprise packaging an article in the thus-prepared container.

Particularly, the crystallized, thin-wall container according to the present invention is useful as a heat-resistant container for foodstuffs, which can resist high temperatures in an electronic range, an electric oven and a gas oven.

Measurement of various transition points and half-width of the crystallization peak

Transition points and half-width of the crystallization peak were measured with a differential, scanning calorimeter made by Mettler Co. (type TA-03000[DSC-20]) under an atmosphere of nitrogen gas at the temperature-raising rate and the temperature-lowering rate of 10 °C/minute.

Further, before lowering the temperature, it was kept for one minute at about 50 °C higher than the melting point of a specimen. As a specimen, a rapidly cooled, pressed sheet or a rapidly cooled, extruded sheet was used.

Tg means the glass transition temperature;

Tm means the melting point;

$Tc_1$ means the crystallization temperature when a specimen is heated from its solid and amorphous state; and

$Tc_2$ means the crystallization temperature when a specimen is cooled from the molten state.

Tg, $Tc_1$ and Tm were measured by raising the temperature. Tg is a temperature at which the absorption of heat was started and both $Tc_1$ and Tm are the peak temperatures. $Tc_2$ is the peak temperature measured by lowering the temperature. The half-width of the crystallization peak was obtained as an integral half-width of $Tc_1$ peak obtained by the above measurement. For polymers of the same kind, the crystallization rate is higher when $Tc_1$ is lower and $Tc_2$ is higher, and also when a half-width of the crystallization peak is smaller.

Crystallinity index

The crystallinity index, Ci, was measured as follows:

(1) separate a crystalline scattering intensity Ac and an amorphous scattering intensity Aa from a wide angle X-ray diffraction pattern of each sample at 2θ = 17 to 23°; and

(2) calculate Ci with the following formula:

$$Ci(\%) = [Ac/(Ac + Aa)]x100$$

For details of the method, refer to "Journal of Applied Polymer Science", Vol. 20, p. 2541 (1076).

Measurement of melt viscosity

The melt viscosity was measured with a CAPILLOGRAPH made by TOYO-SEIKI Co. The measurement was performed at a temperature of 310 °C with a nozzle of L/D of 10 mm/1 mm and under a shear rate of 200/second.

Measurement of solution viscosity (logarithmic viscosity number)

The logarithmic viscosity number, $\eta_{inh}$, was measured by an Ubelohde-type viscometer under the following conditions:

| | |
|---|---|
| solvent; | 1-chloronaphthalene |
| concentration; | 0.4 g/dl |
| temperature | 208 °C |

Measurement of elongation

The elongation is represented by the elongation measured under the tensile speed of 50 mm/minute at 23 °C in accordance with Japanese Industrial Standards (JIS) K 6734.

The following Examples illustrate the present invention.

EXPERIMENTAL EXAMPLES

EXAMPLES OF SYNTHETIC EXPERIMENT

(1) Synthesis of Poly(Paraphenylene Sulfide) (hereinafter referred to as "PPPS").

Into an autoclave, 90 kg of N-methylpyrrolidone (hereinafter referred to as "NMP") and 33.9 kg of $Na_2S \cdot 5H_2O$ containing 46.02 wt% of $Na_2S$ were charged and 13.7 kg of water, 8.3 kg of NMP and 6.2 mol of $H_2S$ were distilled out while raising the temperature of the contents slowly to 203 °C under an atmosphere of nitrogen gas.

Then, 28.8 kg of paradichlorobenzene (hereinafter referred to as "PDCB") and 15 kg of NMP was added and the contents polymerized at 210 °C for 10 hours.

After adding 9.32 kg of water to the system with pressure, the contents were further polymerized at 260 °C for 10 hours. After cooling, the reaction mixture was sieved with a screen of 0.1 mm opening and a granular polymer was separated, then the polymer was washed with acetone and then with water to obtain the washed polymer.

By drying about half of the obtained polymer, PPPS (Polymer A-1) was obtained.

Then, the remaining amount of the polymer was immersed in a 2% aqueous solution of $NH_4Cl$ and treated for 30 minutes at 40 °C. The treated polymer was washed with water and then dried to obtain Polymer A-2.

Viscosity, $\eta_{inh}$, of both polymers was 0.39.

(2) Synthesis of PPPS

Into an autoclave, 110 kg of NMP and 33.6 kg of $Na_2S \cdot 5H_20$ were charged and 15.5 kg of water and NMP and 4.5 mol of $H_2S$ were distilled out while raising the temperature of the contents slowly to 200 °C under an atmosphere of nitrogen gas.

After cooling to 130 °C, 28.7 kg of PDCB and 30 kg of NMP were charged into the autoclave and the contents polymerized at 210 ° for 10 hours. After cooling, the reaction mixture was sieved with a screen of 0.1 mm opening and a granular polymer was separated, then the polymer was washed with acetone and then with water and dried to obtain PPPS(Polymer B). $\eta_{inh}$, of Polymer B was 0.49 and the melt viscosity of Polymer B at 310 °C and 200/second was 820 Pas (8,200 poise).

(3) Synthesis of Block Copolymers of Paraphenylene Sulfide and Metaphenylene Sulfide.

(a) Into an autoclave, 80 kg of NMP and 37.4 kg of $Na_2S \cdot 5H_20$ containing 45.0 wt% of $Na_2S$ were charged and 15.2 kg of water, 14.8 kg of NMP and 5.3 mol of $H_2S$ were distilled out while heating the contents slowly to 200 °C under an atmosphere of nitrogen gas.
Then, 30.9 kg of metadichlorobenzene, 42.2 kg of NMP and 1.0 kg of water were charged into the autoclave and the contents polymerized for 2 hours at 220 °C and further for 7 hours at 230 °C.

(b) Into another autoclave, 75 kg of NMP and 30.6 kg of $Na_2S \cdot 5H_20$ containing 45.9 wt% of $Na_2S$ were charged and 12.7 kg of water, 13.5 kg of NMP and 5.1 mol of $H_2S$ were distilled out while heating the contents slowly to 200 °C under an atmosphere of nitrogen gas.
Then, 26.4 kg of paradichlorobenzene, 25 kg of NMP, 1.0 kg of water and 23.2 kg of polymetaphenylene sulfide slurry obtained in (a) were charged into an autoclave and the contents polymerized for 10 hours at 220 °C. Then, 13.0 kg of water were added and the contents were further polymerized at 260 °C for 5 hours.

By treating the polymerization mixture in the same manner as (1), the block copolymer (C-1) not treated with $NH_4Cl$ and the block copolymer (C-2) treated with $NH_4Cl$ were obtained. $\eta_{inh}$ of the block copolymers (C-1) and C-2) were 0.34 and the ratio of paraphenylene sulfide to metaphenylene sulfide of the copolymers was 85/15 according to the infrared absorption spectra.

(4) Synthesis of Poly(Biphenylene Sulfide) (hereinafter referred to as "PBS").

In a 5 litre autoclave, PBS was obtained by polymerizing 4,4'-dibromobiphenyl and $Na_2S$ in the presence of $H_2O$ and NMP in the following ratio of 240°C for 5 hours:

| | |
|---|---|
| 4,4'dibromobiphenyl | 1.0 mol |
| $Na_2S$ | 1.0 mol |
| $H_2O$ | 2.0 mol |
| NMP | 1.0 kg |

Tm and $Tc_2$ of the obtained polymer (Polymer D) were 430°C and 302°C, respectively.

(5) Production of The Composition.

Using Henschel mixer, the following blended compositions are prepared:

Composition (1): A blended composition obtained by adding 1% by weight of kaoline (made by SHIRAISHI Calcium Co., under the mark CB, average particle diameter of 1µm) to Polymer B (PPPS).

Composition (2): A blended composition obtained by adding 1% by weight of Polymer D(PBS) to Polymer B (PPPS).

MOLDING EXAMPLES 1 to 8

PPPS or PPPS compositions obtained in the above Synthetic Examples were pelletized by a pelletizer.

(1) Molding of the Sheet

The pellets were extruded through a T-die of 25 cm in width and having a lip with gap of 0.55 mm at 320°C and the extruded materials were cast and rapidly cooled on casting rolls the surface temperature of which was kept at 85°C (for PPPS) and 80°C (for block copolymer). Amorphous sheets of 20 cm in width and about 180 µm in thickness were obtained.

The transition temperature, the crystalline feature and the elongation of each of the obtained sheets are shown in Table 1.

TABLE 1. TRANSITION TEMPERATURE AND CRYSTALLINE FEATURE OF SHEET

| Molding Example No. | Sheet | Elongation | Transition Temperature (°C) | | | | Half-width (°C) *1) |
|---|---|---|---|---|---|---|---|
| | | | Tg | $Tc_1$ | Tm | $Tc_2$ | |
| Ex. 1 | A-1 (PPPS) | 230 | 86 | 132 | 277 | 218 | 7 |
| Ex. 2 | A-2 (PPPS treated with $NH_4Cl$) | 210 | 86 | 123 | 278 | 240 | 5 |
| Ex.3 | B (PPPS) | 245 | 88 | 137 | 276 | 216 | 11 |
| Ex.4 | B + 1 wt% of kaoline | 205 | 88 | 136 | 276 | 221 | 9 |
| Ex.5 | B + 1 wt% of D (PBS) | 250 | 88 | 135 | 276 | 223 | 9 |
| Ex.6 | C-1 (block copolymer PPS/MPS *2) | 215 | 73 | 131 | 273 | 209 | 10 |
| Ex.7 | C-2 (block copolymer PPS/MPS treated with $NH_4Cl$) | 180 | 73 | 114 | 275 | 238 | 6 |
| Ex.8 | B + 1 wt% of D (PBS) | 200 | 88 | 134 | 276 | 228 | 6 |

*1) Half-width of the peak of the crystallization curve obtained on crystallization by raising temperature.

It is an index of the crystallization rate used in Japanese Patent Application Laid-Open (KOKAI) Nos. 57- 61,046 (1982) and 57-90,039 (1982). The smaller the half-width is, the larager the crystallization rate becomes.

The crystallinity index of every one of the sheets 1 to 8 was below 15%.

*2) PPS and MPS mean paraphenylene sulfide and metaphenylene sulfide, respectively.

(2) Thermoforming

(a) FORMING EXAMPLES 1 to 7

Every sheet was preliminary heated to 100 ° C and was formed by vacuum forming while keeping the sheet in close contact with the inner surface of the mold of normal temperature.

The mold was a tapered, rectangular-type tray with an opening end and had the following dimensions:

Depth; 3 cm
Opening end; 19 cm in length and 11.5 cm in width
Bottom part; 16 cm in length and 9 cm in width

The formed product was taken out from the mold, set in the other mold for thermal treatment, held for 30 seconds at 180 ° C to crystallize and was taken out from the mold.

The formed products of PPPS did not change their shape in an oven at 230 ° C.

The crystallinity index of the bottom part of the formed container is shown in the following table.

TABLE

| Forming Example No. | Sheet | Crystallinity Index (%) |
|---|---|---|
| 1 | A-1 | 23 |
| 2 | A-2 | 25 |
| 3 | B | 21 |
| 4 | B + kaoline | 22 |
| 5 | B + D | 22 |
| 6 | C-1 | 24 |
| 7 | C-2 | 26 |

(b) FORMING EXAMPLES 8 to 10

The sheets A-1, A-2 and B, which were obtained in Molding Examples 1 to 3, were thermoformed as follows.

The mold was a tapered, circular cup with an opening end in the dimensions of 2 cm in depth, 4.5 cm in diameter of an opening end and 3.5 cm in diameter of the bottom part.

After preliminary heating each sheet to 110 ° C, the sheet was formed by keeping it in close contact with the inner surface of the mold of normal temperature.

The formed product was taken out of the mold, was set to the other mold for thermal treatment and was kept for 20 seconds at 200 ° C to crystallize.

The crystallinity indices of the bottom surface of the formed products were 27 for A-1, 30% for A-2 and 26% for B.

These formed products did not change their shapes in an oven at 230 ° C.

(c) FORMING EXAMPLES 11 and 12

The sheets C-1 and C-2 obtained in Molding Examples 6 and 7 were thermoformed using the same mold as in Molding Examples 8 to 10.

After preliminary heating each sheet to 95 ° C, the sheet was formed by vacuum forming keeping it in close contact with the inner surface of the mold at normal temperature. The formed product was taken out of the mold, set to the other mold for thermal treatment and kept for 30 seconds at 190 ° C to be crystallized.

The crystallinity indices of the bottom surface of the formed product were 25% for C-1 and 28% for C-2.

The formed products did not change their shapes in an oven at 230 ° C.

**Claims**

**1.** A process for the preparation of a crystallized, thin walled container, which process comprises:

(i) extrusion molding a poly(arylene sulfide) through a T-die and immediately rapidly cooling the resulting almost molten sheet on a cooling roll having a temperature of not higher than 110 °C, the poly(arylene sulfide) having a substantially linear structure, containing not less than 70 wt% of a repeating unit

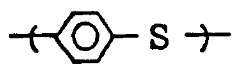

and having a logarithmic viscosity number of from 0.2 to 1.0 as measured in a solution of 1-chloronaphthalene at a concentration of 0.4g/dl and at a temperature of 208 °C, such as to produce a sheet having a thickness of from 0.05 mm to 1 mm, a crystallization index of lower than 15%, an elongation of not less than 100% at room temperature and a half-width of the peak on the crystallization curve, obtained on crystallization of the said sheet by heating, of not more than 15 °C; and

(ii) thermoforming the sheet by a shaping step and crystallization step such that the resulting container has a crystallization index of not less than 15% and a thickness of not less than 0.04 mm and less than 1 mm.

**2.** A process according to claim 1, wherein the said poly(arylene sulfide) has been treated with an aqueous solution of a salt of the strong acid-weak base type after polymerisation.

**3.** A process according to claim 1 or 2, wherein the said poly(arylene sulfide) is a block copolymer comprising from 70 to 95 mol% of a repeating unit

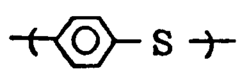

and from 5 to 30 mol% of a repeating unit

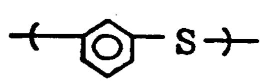

**4.** A process according to any one of the preceding claims, wherein the said poly(arylene sulfide) contains not more than 3% by weight of at least one inorganic material selected from kaoline, talc, mica, activated clay, zirconium oxide, diatomaceous earth and titanium oxide as a nucleating agent.

**5.** A process according to any one of the preceding claims, wherein the said poly(arylene sulfide) contains not more than 10% by weight of a poly(biphenylene sulfide) which has a repeating unit

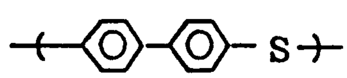

as the main constituent.

**6.** A process according to any one of the preceding claims, wherein the said logarithmic viscosity number is from 0.25 to 0.9.

**7.** A process according to any one of the preceding claims, further comprising packaging an article in the container thus-prepared.

**8.** A process according to claim 7, wherein the article is a foodstuff.

**Patentansprüche**

1. Verfahren zur Herstellung eines kristallisierten dünnwandigen Behälters, das umfaßt:
   i) das Extrusionsformen eines Poly(arylensulfids) durch eine T-Düse und das sofortige schnelle Abkühlen der resultierenden, fast geschmolzenen Folie auf einer Kühlwalze mit einer Temperatur von nicht höher als 110 °C, wobei das Poly(arylensulfid) eine im wesentlichen lineare Struktur hat, die nicht weniger als 70 Gew.-% einer wiederkehrenden Einheit

   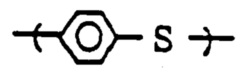

   enthält und eine logarithmische Viskositätszahl von 0,2 bis 1,0 aufweist, gemessen in einer Lösung von 1-Chloronaphthalin bei einer Konzentration von 0,4 g/dl und bei einer Temperatur von 208 °C, unter Bildung einer Folie mit einer Dicke von 0,05 mm bis 1 mm, einem Kristallisationsindex von weniger als 15 % und einer Dehnung von nicht weniger als 100 % bei Raumtemperatur sowie einer Halbwertsbreite des Peaks in der Kristallisationskurve, die bei der Kristallisation der genannten Folie durch Erhitzen erhalten wird, von nicht mehr als 15 °C; und
   ii) das Warmformen (Thermoformen) der Folie unter Anwendung einer Formgebungsstufe und einer Kristallisationsstufe, so daß der resultierende Behälter einen Kristallisationsindex von nicht weniger als 15 % und eine Dicke von nicht weniger als 0,04 mm und von weniger als 1 mm aufweist.

2. Verfahren nach Anspruch 1, worin das Poly(arylensulfid) nach der Polymerisation mit einer wäßrigen Lösung eines Salzes vom starken Säure-schwachen Basen-Typ behandelt worden ist.

3. Verfahren nach Anspruch 1 oder 2, worin das Poly(arylensulfid) ein Block-Copolymer aus 70 bis 95 Mol-% einer wiederkehrenden Einheit

   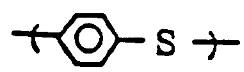

   und 5 bis 30 Mol-% einer wiederkehrenden Einheit

   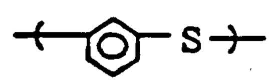

   ist.

4. Verfahren nach einem der vorhergehenden Ansprüche, worin das Poly(arylensulfid) nicht mehr als 3 Gew.-% mindestens eines anorganischen Materials, ausgewählt aus Kaolin, Talk, Glimmer, aktiviertem Ton, Zirkoniumoxid, Diatomeenerde und Titanoxid, als Keimbildner enthält.

5. Verfahren nach einem der vorhergehenden Ansprüche, worin das Poly(arylensulfid) nicht mehr als 10 Gew.-% eines Poly(biphenylensulfids), das eine wiederkehrenden Einheit

   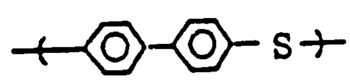

   aufweist, als Hauptbestandteil enthält.

6. Verfahren nach einem der vorhergehenden Ansprüche, worin die logarithmische Viskositätszahl 0,25 bis 0,9 beträgt.

7. Verfahren nach einem der vorhergehenden Ansprüche, das außerdem umfaßt das Verpacken eines Gegenstandes in dem so hergestellten Behälter.

**8.** Verfahren nach Anspruch 7, worin der Gegenstand ein Lebensmittel ist.

**Revendications**

**1.** Procédé pour la préparation d'un récipient cristallisé à paroi mince, lequel procédé comprend :

(i) le moulage par extrusion d'un poly(sulfure d'arylène) à travers une filière en T, immédiatement suivi du refroidissement rapide de la feuille presque fondue résultante sur un cylindre de refroidissement ayant une température ne dépassant pas 110 °C, le poly(sulfure d'arylène) ayant une structure pratiquement linéaire, ne contenant pas moins de 70% en poids d'une unité répétée

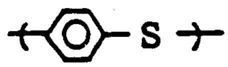

et ayant un indice de viscosité logarithmique de 0,2 à 1,0 tel qu'il est mesuré dans une solution de 1-chloronaphtalène à une concentration de 0,4 g/l et à une température de 208 °C, de façon à produire une feuille ayant une épaisseur de 0,05 mm à 1 mm, un indice de cristallisation inférieur à 15%, un allongement d'au moins 100% à la température ambiante et une demi-largeur du pic sur la courbe de cristallisation, obtenue par cristallisation de cette feuille par chauffage, ne dépassant pas 15 °C; et

(ii) le thermoformage de la feuille au cours d'une étape de façonnage et d'une étape de cristallisation, tel que le récipient résultant présente un indice de cristallisation d'au moins 15% et une épaisseur d'au moins 0,04 mm et inférieure à 1 mm.

**2.** Procédé suivant la revendication 1, dans lequel ce poly(sulfure d'arylène) a été traité avec une solution aqueuse d'un sel de type acide fort-base faible après polymérisation.

**3.** Procédé suivant les revendications 1 ou 2, dans lequel ce poly(sulfure d'arylène) est un copolymère séquencé comprenant de 70 à 95% en moles d'une unité répétée

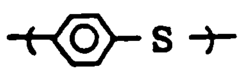

et de 5 à 30% en moles d'une unité répétée

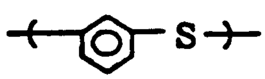

**4.** Procédé suivant l'une quelconque des revendications précédentes, dans lequel ce poly(sulfure d'arylène) ne contient pas plus de 3% en poids d'au moins un matériau inorganique choisi parmi le kaolin, le talc, le mica, une argile activée, l'oxyde de zirconium, une terre d'infusoires et l'oxyde de titane comme agent de nucléation.

**5.** Procédé suivant l'une quelconque des revendications précédentes, dans lequel ce poly(sulfure d'arylène) ne contient pas plus de 10% en poids d'un poly(sulfure de biphénylène) qui a une unité répétée

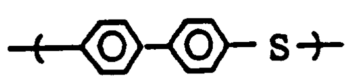

comme principal constituant.

**6.** Procédé suivant l'une quelconque des revendications précédentes, dans lequel cet indice de viscosité logarithmique est de 0,25 à 0,9.

**7.** Procédé suivant l'une quelconque des revendications précédentes, comprenant de plus le conditionnement d'un article dans le récipient ainsi préparé.

**8.** Procédé suivant la revendication 7, dans lequel l'article est une denrée alimentaire.